# EUROPÄISCHE PATENTSCHRIFT

(11) **EP 3 145 768 B1**
(45) Veröffentlichungstag und Bekanntmachung des Hinweises auf die Patenterteilung: **16.09.2020**
(21) Anmeldenummer: 15718448.2
(22) Anmeldetag: 23.03.2015
(51) Int. Cl.: B60T 8/40, F16L 55/045, F16L 55/055

(54) **DÄMPFUNGSVORRICHTUNG**
DAMPENING DEVICE
DISPOSITIF D'AMORTISSEMENT

(30) Priorität: 21.05.2014 DE 102014209682
(43) Veröffentlichungstag der Anmeldung: 29.03.2017
(73) Patentinhaber: Robert Bosch GmbH, 70442 Stuttgart (DE)
(72) Erfinder: NORBERG, Jens, 70437 Stuttgart (DE); SCHELLNEGGER, Patrick, 71636 Ludwigsburg (DE); LECHLER, Andreas, 71696 Moeglingen (DE)
(86) Internationale Anmeldenummer: PCT/EP2015/056087
(87) Internationale Veröffentlichungsnummer: WO 2015/176849

(56) Entgegenhaltungen:
- EP-A1- 0 360 378
- DE-A1-102011 089 183
- DE-A1-102012 207 334

## Beschreibung

### Stand der Technik

Die Erfindung betrifft eine Dämpfungsvorrichtung, insbesondere zur Dämpfung von Druckpulsationen in einem Bremskreis einer schlupfregelbaren hydraulischen Fahrzeugbremsanlage. Derartige Dämpfungsvorrichtungen sind beispielsweise in der DE 10 2012 207 334 A1 und der DE 10 2011 089 183 A1 offenbart.

Schlupfregelbare Bremsanlagen, auch bekannt unter dem Begriff ESP-Bremsanlagen, unterstützen den Fahrer in kritischen Fahrsituationen. Die Fachwelt unterscheidet verschiedene Betriebszustände dieser Bremsanlagen, nämlich einen passiven, einen teil-aktiven oder einen vollaktiven Bremsbetrieb. Im passiven Bremsbetrieb wird der Radbremsdruck vom Fahrer, z.B. durch Betätigung eines Bremspedals, erzeugt.

Im teilaktiven Fall ist der Druck im Bremssystem höher, als vom Fahrer vorgegeben, was bedeutet dass der vom Fahrer erzeugte Bremsdruck von der Bremsanlage verstärkt wird.

Im vollaktiven Betrieb hingegen betätigt der Fahrer das Bremspedal gar nicht und der Bremsdruck wird allein durch einen im Bremssystem vorgesehenen Druckerzeuger bereitgestellt.

Als Druckerzeuger werden hauptsächlich Hubkolbenpumpen eingesetzt. Jedem Bremskreis der Fahrzeugbremsanlage können eine oder mehrere Kolbenpumpen zugeordnet sein. Hubkolbenpumpen arbeiten prinzipbedingt zyklisch, wodurch der Druckaufbau nicht gleichmäßig linear, sondern entsprechend dem Förderverhalten des Pumpenelements stufenförmig erfolgt. Die Druckpulsationen von Hubkolbenpumpen sind im Fahrzeuginneren hörbar und/oder sind als Vibrationen am Bremspedal spürbar. Beides ist aus Komfortgesichtsgründen unerwünscht.

Um Druckpulsationen zu glätten sind deshalb Dämpfungsvorrichtungen stromabwärts des Druckerzeugers vorgesehen. Wie in der DE 102011089183 A1 offenbart, handelt es sich bei diesen Dämpfungsvorrichtungen um die Kombination einer Druckmittelkapazität mit einem in Abhängigkeit des Bremsdrucks veränderlichen Druckmittelaufnahmevolumen und einem nachgeschalteten Strömungswiderstand. Letztere kann als Konstantdrossel mit einem festgelegten Strömungsquerschnitt oder als dynamische Drossel mit einem in Abhängigkeit des Drucks veränderlichen Strömungsquerschnitt ausgeführt sein.

Ein unerwünschter Nebeneffekt dieser Dämpfungsmaßnahmen ist, dass das von der Druckmittelkapazität aufgenommene Druckmittelvolumen nicht für einen Bremsdruckaufbau zur Verfügung steht und sich darum im passiven Betriebszustand der Fahrzeugbremsanlage, also wenn der Bremsdruck vom Fahrer erzeugt wird, der Pedalweg zum Aufbau eines bestimmten Bremsdrucks am Hauptbremszylinder verlängert.

Eine Begrenzung der Pedalwegverlängerung wäre durch eine Begrenzung des Aufnahmevolumens der Dämpfungsvorrichtung möglich, würde sich allerdings in weniger wirksamen Dämpfungseigenschaften im teilaktiven oder vollaktiven Bremsbetrieb bemerkbar machen.

Ziel der Weiterentwicklung von Dämpfungsvorrichtungen ist es vor diesem Hintergrund, deren Dämpfungseigenschaften zu erhalten bzw. zu verbessern, ohne den Pedalweg zur Erzeugung des Bremsdrucks im passiven Betriebszustand der Fahrzeugbremsanlage zu verlängern.

### Vorteile der Erfindung

Die Erfindung schlägt zur Lösung dieser Aufgabe Mittel vor, die während des passiven Betriebszustands der Fahrzeugbremsanlage das Druckmittelaufnahmevolumen der Dämpfungsvorrichtung begrenzen und damit einer Verlängerung des Pedalwegs entgegen wirken. Im teilaktiven oder vollaktiven Betriebszustand der Fahrzeugbremsanlage sind die vorgeschlagenen Mittel demgegenüber unwirksam, so dass das Druckmittelaufnahmevolumen in seinem gesamten Umfang zur Dämpfung auftretender Druckpulsationen zur Verfügung steht. Die Erfindung ermöglicht damit den Einsatz von Dämpfungsvorrichtungen mit einem gegenüber bekannten Ausführungen vergrößerten Druckmittelaufnahmevolumen und dementsprechend optimierten Dämpfungseigenschaften.

Weitere Vorteile oder vorteilhafte Weiterbildungen der Erfindung ergeben sich aus den Unteransprüchen und/oder aus der nachfolgenden Beschreibung.

### Zeichnung

Ausführungsbeispiele der Erfindung sind in der Zeichnung dargestellt und werden in der nachfolgenden Beschreibung detailliert erläutert.

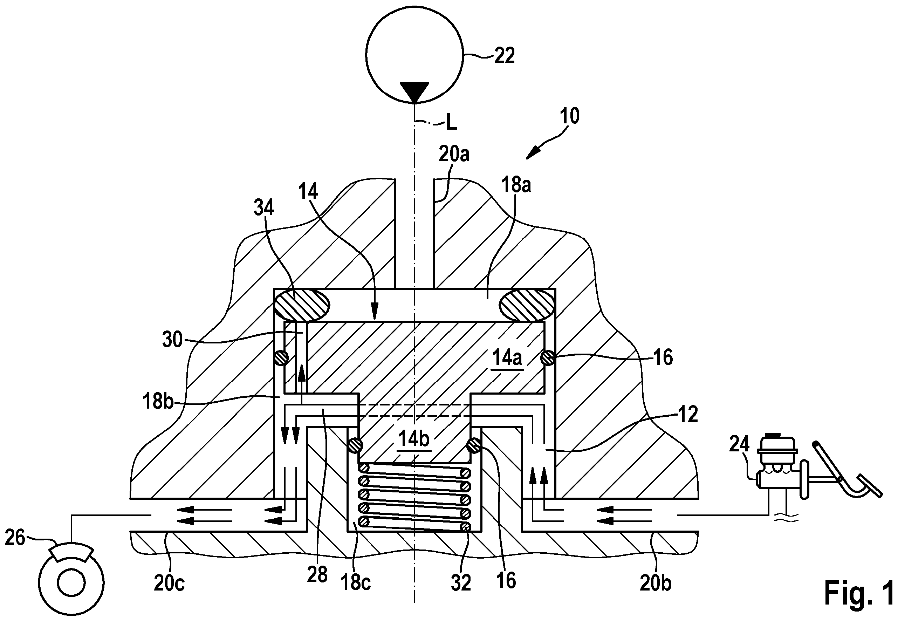

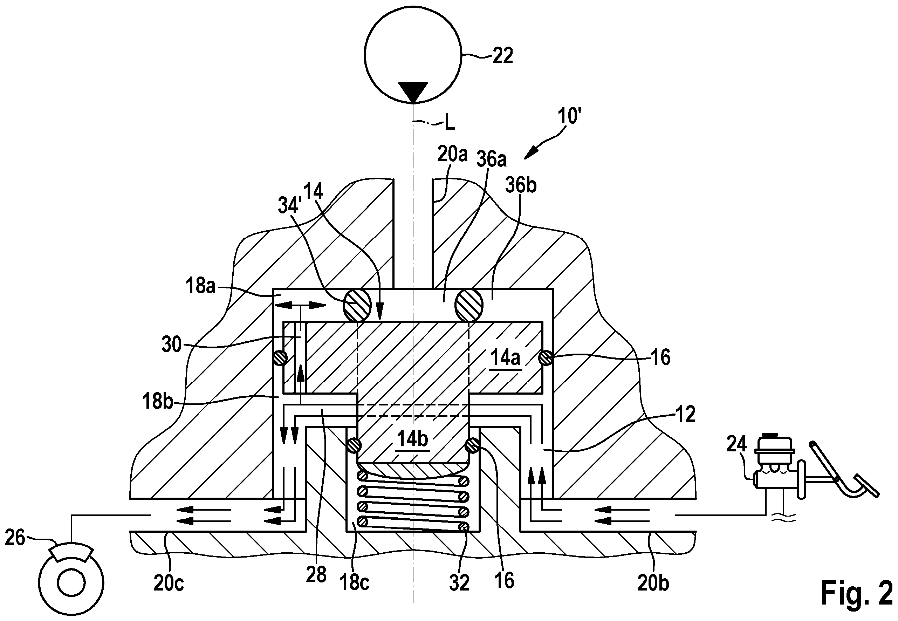

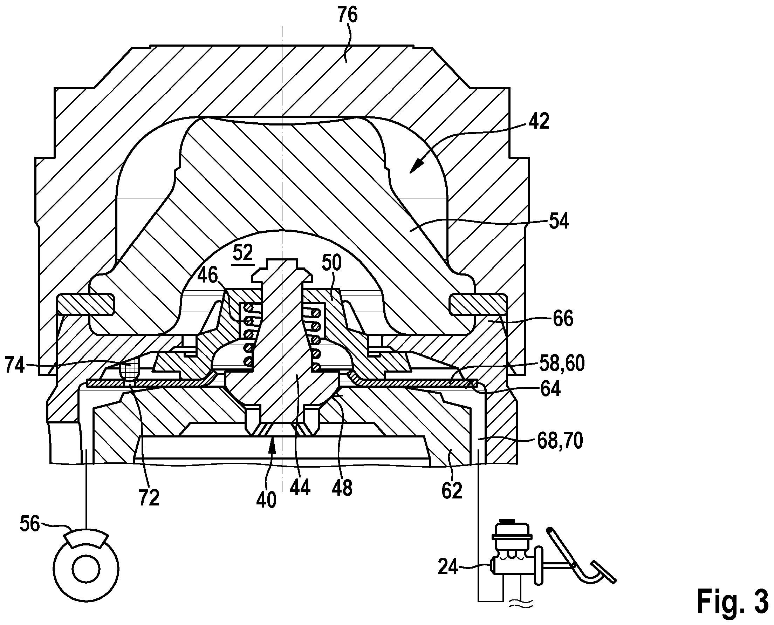

Die Figuren 1 und 2 zeigen ein erstes und ein zweites Ausführungsbeispiel der Erfindung anhand von Längsschnitten durch Dämpfungsvorrichtungen, die mit Drosselkörpern in Gestalt von Kolben, die in ihrem Außendurchmesser gestuft ausgeführt sind, sogenannten Stufenkolben, ausgestattet sind, während Figur 3 ein drittes Ausführungsbeispiel der Erfindung anhand eines Längsschnitts durch eine Dämpfungsvorrichtung zeigt, die mit einem elastisch verformbaren Drosselkörper bestückt ist.

### Beschreibung der Ausführungsbeispiele

Die in Figur 1 dargestellte Dämpfungsvorrichtung 10 umfasst einen zylindrischen und in seinem Innendurchmesser einmal rechtwinklig abgestuften Hohlraum 12. In diesem Hohlraum 12 ist ein Drosselkörper in Form eines entsprechend abgestuften Stufenkolbens 14 verschiebbar geführt. Dieser Stufenkolben 14 gliedert sich in zwei Kolbenabschnitte 14a, 14b unterschiedlich großer Außendurchmesser, die in Richtung einer Längsachse L des Stufenkolbens 14 koaxial aneinandergrenzen. Beide Kolbenabschnitte 14a, 14b sind umfangseitig mit Dichtungen 16 bestückt. Insgesamt gliedert sich die Dämpfungsvorrichtungen 10 damit in drei Dämpferkammern 18a, 18b, 18c, welche vom Stufenkolben 14 und von der den Hohlraum 12 umgebenden Wandung begrenzt und gegeneinander abgedichtet sind.

Eine erste, gemäß Figur 1 obere Dämpferkammer 18a ist von der Stirnfläche des Kolbenabschnitts 14a mit dem größeren Kolbendurchmesser begrenzt. Sie ist über einen ersten Druckmittelanschluss 20a mit einer Hochdruckseite eines Druckerzeugers 22 verbunden.

Eine zweite, zwischen den beiden Dichtungen 16 ausgebildete Dämpferkammer 18b ist ringförmig ausgebildet und erstreckt sich entlang des Umfangs des zweiten, in seinem Durchmesser kleineren Kolbenabschnitts 14b. Diese zweite Dämpferkammer 18b ist über einen zweiten Druckmittelanschluss 20b an den Hauptbremszylinder 24 einer Fahrzeugbremsanlage angeschlossen und über einen dritten Druckmittelanschluss 20c mit einer Radbremse 26 kontaktiert. Der zweite Druckmittelanschluss 20b liegt dem dritten Druckmittelanschluss 20c diametral gegenüber, wobei eine Druckmittelverbindung 28 zwischen den Druckmittelanschlüssen 20b, 20c besteht, die entlang des Umfangs des im Durchmesser kleineren Kolbenabschnitts 14b verläuft und deren Strömungsquerschnitt in Richtung der Längsachse L des Stufenkolbens 14 veränderlich ist. Der Strömungsquerschnitt hängt ab von der momentanen Position des Stufenkolbens 14 innerhalb des Hohlraums 12. Auf diese Weise wird die Wirkung eines Strömungswiderstands erzeugt, welcher die Abströmung von Druckmittel zur Radbremse 26 drosselt.

Aufgrund der Dichtungen 16 an den beiden Kolbenabschnitten des Stufenkolbens 14 sind die Dämpferkammern 18a und 18b gegeneinander abgedichtet. Allerdings ist der Stufenkolben 14 mit einem Drosselkanal 30 versehen, welcher zwischen beiden Dämpferkammern 18a und 18b eine Druckmittelverbindung schafft. Dieser Drosselkanal 30 ist am ersten, durchmessergrößeren Kolbenabschnitt 14a des Stufenkolbens 14 angeordnet, verläuft achsparallel zu dessen Längsachse L und befindet sich radial außerhalb des Durchmessers des angrenzenden zweiten, durchmesserkleineren Kolbenabschnitts 14b. Der Drosselkanal 30 mündet in die zweite Dämpferkammer 18b ein.

Die dritte Dämpferkammer 18c der Dämpfungsvorrichtung 10 ist von der Stirnfläche des Kolbenabschnitts 14b mit dem kleineren Außendurchmesser und dem zugeordneten Abschnitt der Wandung des Hohlraums 12 begrenzt. Diese dritte Dämpferkammer 18c nimmt ein Federelement 32 auf, welches sich einerseits am Grund des Hohlraums 12 und andererseits an der kleineren der beiden Stirnflächen des Stufenkolbens 14 abstützt. Die Kraft des Federelements 32 zwingt den Stufenkolben 14 in seine Grundstellung. In dieser Grundstellung weist die erste Dämpferkammer 18a ihr minimales und die zweite sowie die dritte Dämpferkammer 18b, 18c jeweils ihr maximales Volumen auf. Der Strömungsquerschnitt der Druckmittelverbindung 28 zwischen hauptbremszylinderseitigem Druckmittelanschluss 20b und radbremsseitigen Druckmittelanschluss 20c der zweiten Dämpferkammer 18b ist ebenfalls maximal groß und dementsprechend minimal ihre Drosselwirkung.

Die beschriebene Dämpfungsvorrichtung 10 funktioniert wie folgt:
Bei einem teilaktiven oder einem vollaktiven Betriebszustand der Fahrzeugbremsanlage wird Bremsdruck durch den extern angetriebenen Druckerzeuger 22 erzeugt. Dieser fördert Bremsfluid in die Dämpferkammer 18a der Dämpfungsvorrichtung 10, aus der das Druckmittel über den Drosselkanal 30 des Stufenkolbens 14 in die Dämpferkammer 18b und von dort aus schließlich zur angeschlossenen Radbremse 26 strömt. Vom Druckerzeuger 22 erzeugte Druckpulsationen bewirken eine hin und her Verschiebung des Stufenkolbens 14 innerhalb des Hohlraums 12 der Dämpfungsvorrichtung 10, verändern dadurch den Strömungsquerschnitt der Druckmittelverbindung 28 zwischen dem hauptbremszylinderseitigen Druckmittelanschluss 20b und dem Druckmittelanschluss 20c der Radbremse 26 und verändern gleichzeitig das Volumenverhältniss zwischen Dämpferkammer 18a und Dämpferkammer 18b mit dem Ergebnis, dass die Druckpulsationen von der Dämpfungsvorrichtung 10 ausgeglichen bzw. geglättet werden.

Wird jedoch im passiven Betriebszustand der Fahrzeugbremsanlage, das heißt bei nicht betätigtem Druckerzeuger 22, vom Fahrer Bremsdruck aufgebaut, so wird Druckmittel in die Dämpferkammer 18b hinein verschoben. Über den Drosselkanal 30 im Stufenkolben 14 gelangt ein Teil des zuströmenden Druckmittels, unter reduziertem Druck in die Dämpferkammer 18a, während ein zweiter Teil des Druckmittels zur Radbremse 26 hin aus der Dämpfungsvorrichtung 10 abströmt.

Der steigende Druck in der Dämpferkammer 18a wirkt auf die größere der beiden Stirnflächen des Stufenkolbens 14 und drückt den Stufenkoben 14, entgegen der rückstellenden Kraft des Federelements 32 und entgegen der Druckkraft auf die flächenmäßig kleinere, die Dämpferkammer 18b begrenzende Ringfläche, gemäß Figur 1 nach unten, bis sich zwischen den am Stufenkolben 14 angreifenden Kräften ein Kräftegleichgewicht einstellt. Die Dämpferkammer 18a der Dämpfungsvorrichtung 10 nimmt demnach Druckmittelvolumen auf, welches dem Aufbau von Bremsdruck in der Radbremse 26 nicht mehr zur Verfügung steht und somit am Hauptbremszylinder 24 den Pedalweg zum Aufbau eines bestimmten Bremsdrucks an der Radbremse 26 verlängert.

Um diese Pedalwegverlängerung zu vermeiden sind erfindungsgemäß Mittel 34 vorgesehen, welche das Druckmittelaufnahmevolumen der Dämpfungsvorrichtung 10 während der Grundstellung des Stufenkolbens 14 begrenzen.

Diese Mittel 34 bestehen nach Figur 1 in einem in der Dämpferkammer 18a angeordneten Dichtungsring, dessen mittlerer Radius dem Abstand des Drosselkanals 30 von der Längsachse L der Dämpfungsvorrichtung in radialer Richtung entspricht. Wenn der Stufenkolben 14 vom Federelement 32 in seine Grundstellung gedrückt ist, überdeckt der Dichtungsring den Mündungsquerschnitt des Drosselkanals 30 in die Dämpferkammer 18a und unterbricht damit die Druckmittelverbindung zwischen den Dämpferkammern 18a und 18b. Bei einem Bremsdruckaufbau durch den Fahrer kann dadurch kein Druckmittel aus der Dämpferkammer 18b in die Dämpferkammer 18a einströmen und der Stufenkolben 14 verharrt in seiner Grundstellung. Somit ist die Dämpfungsvorrichtung 10 in diesem Betriebszustand der Fahrzeugbremsanlage wirkungslos, was allerdings keine funktionstechnischen Nachteile hat, weil während dieses Betriebszustands keine Betätigung des Druckerzeugers 22 erfolgt und somit keine Druckpulsationen auftreten.

Demgegenüber bewirkt bei teil- oder vollaktivem Bremsdruckaufbau, also bei betätigtem Druckerzeuger 22, das geförderte Druckmittel einen Druckaufbau in Dämpferkammer 18a und folglich eine Bewegung des Stufenkolbens 14 entgegen der Kraft des Federelements 32 der Dämpferkammer 18c. Der Stufenkolben 14 entfernt sich vom vorgeschlagenen Mittel 34 und gibt die Druckmittelverbindung zwischen diesen Dämpferkammern 18a, 18b frei. Die Dämpfungsvorrichtung 10 kann demnach wie oben beschrieben wirken und die vom Druckerzeuger 22 ausgelösten Druckpulsationen dämpfen.

Beim zweiten Ausführungsbeispiel einer erfindungsgemäßen Dämpfungsvorrichtung 10' nach Figur 2 hat das erfindungsgemäße Mittel 34' andere äußere Abmessungen als in Figur 1. Die übrigen Bauteile entsprechen einander und tragen deshalb die in Figur 1 verwendeten Bezugszeichen. Gemäß Figur 2 hat der das Mittel 34' zur Begrenzung des Druckmittelaufnahmevolumens der Dämpfungsvorrichtung 10' bildende Dichtungsring einen mittleren Radius, der zumindest annähernd dem Radius des kleineren Kolbenabschnitts 14b des Stufenkolbens 14 entspricht.

In der Grundstellung der Dämpfungsvorrichtung 10' wird die Dämpferkammer 18a dadurch in eine vom Dichtungsring umschlossene Teilkammer 36a und in eine außerhalb des Dichtungsrings liegende Teilkammer 36b aufgeteilt. In die äußere Teilkammer 36b mündet der Drosselkanal 30 des Stufenkolbens 14 ein, so dass bei einem Bremsdruckaufbau durch den Fahrer Druckmittel aus Dämpferkammer 18b in die Teilkammer 36b strömt. Die Kolbenstirnfläche im Bereich der Teilkammer 36b ist kleiner oder maximal genauso groß wie die gegenüberliegende, der Dämpferkammer 18b zugeordnete Kolbenringfläche des Stufenkolbens 14, so dass sich keine resultierende Kraft ausbildet, welchen den Stufenkolben 14 entgegen der Kraft des Federelements 32 vom Ring bzw. vom Mittel 34' zur Begrenzung des Druckmittelaufnahmevolumens der Dämpfungsvorrichtung 10' abhebt.

Die Verwendung eines Dichtungsrings als Mittel 34 oder 34' ist selbstverständlich nicht obligatorisch. Insbesondere beim Ausführungsbeispiel nach Figur 1 ließen sich gleichfalls auch noppen-, zapfen- oder kegelförmig ausgebildete Mittel einsetzen, welcher an einer dem Drosselkanal 30 des Stufenkobens 14 gegenüber liegenden Stelle der Wandung der Dämpferkammer 18a angebracht sind.

Die in den Figuren 1 und 2 dargestellten und in diesem Zusammenhang erläuterten Dämpfungsvorrichtungen 10 und 10' sind, wie dargelegt, mit einem starren Drosselkörper in Gestalt eines federbeaufschlagten Stufenkolbens 14 ausgestattet. Anstelle von Stufenkolben lassen sich alternativ auch elastisch verformbare und beispielsweise in Form einer Membran oder eines Federbalgs ausgebildete Drosselkörper einsetzen. Eine Lösung mit einem Drosselkörper in Form einer elastisch verformbaren Membran 60 zeigt Figur 3.

Figur 3 stellt dazu von einem Druckerzeuger das Pumpenauslassventil 40 sowie eine stromabwärts davon angeordnete Dämpfungsvorrichtung 42 dar. Das Pumpenauslassventil 40 weist einen pilzförmigen Schließkörper 44 auf, der von einer Auslassventilfeder 46 gegen einen Auslassventilsitz 48 gedrückt wird. Dazu ist die Auslassventilfeder 46 an einer Federhalterung 50 sowie an der Rückseite eines kalottenförmigen Kopfes des Schließkörpers 44 abgestützt. Bei geöffnetem Auslassventilsitz 48 strömt Druckmittel unter Hochdruck in eine erste Dämpferkammer 52 der Dämpfungsvorrichtung 42 ein. Deren Wandung ist von einem tassenförmigen Begrenzungselement 54 aus Elastomermaterial gebildet. Das Begrenzungselement 54 ist im Inneren eines topfförmigen Stopfens 76 aufgenommen, füllt den zur Verfügung stehenden Raum allerdings nur teilweise aus. Die vom Begrenzungselement 54 eingeschlossene Dämpferkammer 52 kann dadurch in Abhängigkeit des Drucks des zuströmenden Druckmittels ihr Druckmittelaufnahmevolumen verändern.

Zusätzlich zur bestehenden Verbindung der Dämpferkammer 52 mit dem Pumpenauslassventil 40 bzw. mit der Hochdruckseite des Druckerzeugers ist die Dämpfungskammer 52 mit einer Radbremse 56 kontaktiert. In dieser Strömungsverbindung befindet sich eine dynamische Drossel, welche ihren Strömungsquerschnitt in Abhängigkeit des Druckunterschieds zu ihren beiden Seiten verändert. Die dynamische Drossel umfasst eine Membran 60, welche aus elastisch verformbarem Material, vorzugsweise aus Federblech, hergestellt ist. Diese ist im Bereich ihres Innendurchmessers ortsfest eingespannt zwischen der Federhalterung 50 und der Stirnfläche einer Laufbuchse 62 des Druckerzeugers und liegt mit ihrem Außendurchmesser unter mechanischer Vorspannung an einer Schulter 64 auf, welche an einem das Pumpenauslassventil 40 aufnehmenden Ventilträger 66 ausgebildet ist. Als Ventilträger 66 dient einen hohlzylindrischer Körper, der unter Ausbildung eines druckmittelleitenden Spalts 68 die Laufbuchse 62 an deren Umfang abschnittsweise umgibt. Mit steigendem Druck in der Dämpferkammer 52 bewirken die an der Membran 60 angreifenden Druckkräfte eine Verwölbung derselben, wodurch sie umfangseitig zumindest abschnittsweise von der Schulter 64 abhebt und einen die Strömung drosselnden Querschnitt freigibt, durch den Druckmittel in den Spalt 68 zwischen Laufbuchse 62 und Ventilträger 66 ein- und von dort zur Radbremse 56 hin abströmt. Der Spalt 68 bildet eine zweite Dämpferkammer 70 der Dämpfungsvorrichtung 42. Die Dämpferkammer 70 ist mit dem Hauptbremszylinder der Fahrzeugbremsanlage einerseits und mit der Radbremse 56 andererseits verbunden, so dass vom Fahrer durch Muskelkraft erzeugter Bremsdruck vom Hauptbremszylinder 24 auf direktem Weg zur Radbremse 56 gelangt. Über einen Drosselkanal 72 in der Membran 60 ist die zweite Dämpfungskammer 70 bzw. der Spalt 68 mit der ersten Dämpferkammer 52 verbunden. Der Drosselkanal 72 stellt somit eine ebenfalls gedrosselte Druckmittelverbindung zwischen den beiden Dämpferkammern 52 und 70 her.

Um nun zu verhindern, dass im passiven Betriebszustand der Fahrzeugbremsanlage, also wenn der Bremsdruck allein vom Fahrer und nicht vom Druckerzeuger bereitgestellt wird, Bremsfluid aus der zweiten Dämpferkammer 70 über den Drosselkanal 72 in die erste Dämpferkammer 52 einströmt und damit für einen Bremsdruckaufbau in der Radbremse 26 nicht mehr zur Verfügung steht, sind auch bei diesem Ausführungsbeispiel Mittel 74 vorgesehen, die das Druckmittelaufnahmevolumen der Dämpfungsvorrichtung 42 begrenzen, während sich der Drosselkörper, welcher beim Ausführungsbeispiel nach Figur 3 von der Membran 60 ausgebildet ist, in der Grundstellung befindet. Bei diesen Mitteln 74 handelt es sich beispielsweise um einen vorstehenden Zapfen, der am Ventilträger 66 derart platziert ist, dass er einen Mündungsquerschnitt des Drosselkanals 72 der Membran 60 in die Dämpferkammer 52 verschließt, wenn die Membran 60 an der zugeordneten Schulter 64 des Ventilträgers 66 aufliegt, also die Grundstellung einnimmt.

Im teil- oder vollaktiven Betriebszustand der Fahrzeugbremsanlage, wenn also Bremsdruck vom Druckerzeuger bereitgestellt wird, ist der Druck in der ersten Dämpferkammer 52 dieser Dämpfungsvorrichtung 42 so groß, dass der Drosselkörper bzw. die Membran 60 von der Schulter 64 und der Zapfen vom Mündungsquerschnitt des Drosselkanals 72 in die Dämpferkammer 52 abgehoben ist und damit eine gedrosselte Druckmittelverbindung zwischen den Dämpferkammern 52 und 70 besteht. Der Förderstrom des Druckerzeugers gelangt in die erste Dämpferkammer 52, kann von dort aus gedrosselt in den Spalt 68 und schließlich zur Radbremse 56 weiterfließen. Druckpulsationen dieses Förderstroms werden durch die volumenveränderliche erste Dämpferkammer 52 in Wirkverbindung mit dem stromabwärts davon ausgebildeten Strömungswiderstand 58 gedämpft. Dieser Strömungswiderstand 58 ergibt sich aus dem druckabhängig veränderlichen Strömungsquerschnitt zwischen der Schulter 64 und dem Umfang der Membran 60, sowie dem Querschnitt des Drosselkanals 72 der Membran 60.

Selbstverständlich sind Änderungen oder Ergänzungen an den beschriebenen Ausführungsbeispielen denkbar, ohne von dem durch die Ansprüche definierten Grundgedanken der Erfindung abzuweichen.

## Patentansprüche

1. Dämpfungsvorrichtung (10, 10', 42) zur Dämpfung von Druckpulsationen, insbesondere in einem Bremskreis einer schlupfregelbaren hydraulischen Fahrzeugbremsanlage,
mit einem entgegen einer Widerstandskraft verform- oder verlagerbaren Drosselkörper (14, 60), der eine in ihrem Volumen veränderliche erste Dämpferkammer (18a, 52) von einer zweiten Dämpferkammer (18b, 70) trennt, und mit einem zwischen der ersten Dämpferkammer (18a, 52) und der zweiten Dämpferkammer (18b, 70) bestehenden Drosselkanal (30,72), welcher zwischen den beiden Dämpferkammern (18a und 18b) eine Druckmittelverbindung schafft,
**dadurch gekennzeichnet,**
**dass** Mittel (34, 34', 74) vorgesehen sind, welche während der Grundstellung des Drosselkörpers (14, 60), in der die erste Dämpferkammer (18a) ihr minimales und die zweite Dämpferkammer (18b) ihr maximales Volumen aufweisen, die Druckmittelverbindung zwischen den Dämpferkammern (18a, 18b) unterbrechen.

2. Dämpfungsvorrichtung nach Anspruch 1, **dadurch gekennzeichnet, dass** der Drosselkanal (30, 72) am Drosselkörper (14, 60) ausgebildet ist und dass die Mittel (34, 74) diesen Drosselkanal (30, 72) verschließen, während der Drosselkörper (14, 60) seine Grundstellung einnimmt.

3. Dämpfungsvorrichtung nach Anspruch 2, **dadurch gekennzeichnet, dass** die Mittel (34, 74) einen Mündungsquerschnitt des Drosselkanals (30, 72) in die erste Dämpferkammer (18a, 52) verschließen.

4. Dämpfungsvorrichtung nach einem der Ansprüche 1 bis 3, **dadurch gekennzeichnet, dass** die Mittel (34, 74) einen Dichtungsring aufweisen, der in der ersten Dämpferkammer (18a, 52) angeordnet ist.

5. Dämpfungsvorrichtung nach einem der Ansprüche 1 bis 3, **dadurch gekennzeichnet, dass** die Mittel (74) einen Zapfen, Kegel oder Stift aufweisen, der in der ersten Dämpfungskammer (18a, 52) angeordnet sind.

6. Dämpfungsvorrichtung nach einem der Ansprüche 1 bis 5, **dadurch gekennzeichnet, dass** der Drosselkörper (14, 60) einen entgegen der Kraft einer Rückstellfeder betätigbaren und in seinem Außendurchmesser abgestuften Stufenkolben (14) aufweist, der in einem in seinem Innendurchmesser entsprechend abgestuften Hohlraum (12) der Dämpfungsvorrichtung (10, 10') hin- und herbeweglich aufgenommen ist.

7. Dämpfungsvorrichtung nach einem der Ansprüche 1 bis 5, **dadurch gekennzeichnet, dass** der Drosselkörper (14, 60) eine elastisch verformbare Membran (60) aufweist, die umfangseitig an einer Schulter (64) der Dämpfungsvorrichtung (42) aufliegt.

8. Dämpfungsvorrichtung nach einem der Ansprüche 1 bis 7, **dadurch gekennzeichnet, dass** die erste Dämpferkammer (18a, 52) an eine Druckseite eines Druckerzeugers (22) und dass die zweite Dämpferkammer (18b, 70) an eine Radbremse (26, 56) und an einen Hauptbremszylinder (24) der Fahrzeugbremsanlage anschließbar sind.

## Claims

1. Damping device (10, 10', 42) for damping pressure pulsations, in particular in a brake circuit of a hydraulic vehicle brake system with slip control, having a throttle member (14, 60) which is deformable or repositionable counter to a resistance force and which separates a first volume-variable damper chamber (18a, 52) from a second damper chamber (18b, 70), and
having a throttle duct (30, 72) which is disposed between the first damper chamber (18a, 52) and the second damper chamber (18b, 70) and which establishes a pressurizing medium connection between the two damper chambers (18a and 18b),
**characterized in that**
means (34, 34', 74) which during the initial position of the throttle member (14, 60), in which the first damper chamber (18a) has the minimum volume thereof and the second damper chamber (18b) has the maximum volume thereof, interrupt the pressurizing medium connection between the damper chambers (18a, 18b) are provided.

2. Damping device according to Claim 1, **characterized in that** the throttle duct (30, 72) is configured on the throttle member (14, 60), and **in that** the means (34, 74) close said throttle duct (30, 72) while the throttle member (14, 60) assumes its initial position.

3. Damping device according to Claim 2, **characterized in that** the means (34, 74) close a mouth cross section of the throttle duct (30, 72) into the first damper chamber (18a, 52).

4. Damping device according to one of Claims 1 to 3, **characterized in that** the means (34, 74) have an annular seal which is disposed in the first damper chamber (18a, 52).

5. Damping device according to one of Claims 1 to 3, **characterized in that** the means (74) have a post, a cone, or a pin, which are disposed in the first damper chamber (18a, 52).

6. Damping device according to one of Claims 1 to 5, **characterized in that** the throttle member (14, 60) has a stepped piston (14) which in terms of its external diameter thereof is graduated and is activatable counter to the force of a restoring spring and which is received so as to be movable in a reciprocating manner in a cavity (12) of the damping device (10, 10') that in terms of its internal diameter is correspondingly graduated.

7. Damping device according to one of Claims 1 to 5, **characterized in that** the throttle member (14, 60) has an elastically deformable diaphragm (60) which circumferentially bears on a shoulder (64) of the damping device (42).

8. Damping device according to one of Claims 1 to 7, **characterized in that** the first damper chamber (18a, 52) is connectable to a pressure side of a pressure generator (22), and **in that** the second damper chamber (18b, 70) is connectable to a wheel brake (26, 56) and to a master brake cylinder (24) of the vehicle brake system.

## Revendications

1. Dispositif d'amortissement (10, 10', 42) pour l'amortissement de pulsations de pression, notamment dans un circuit de freinage d'une unité de freinage hydraulique de véhicule à glissement réglable, comprenant un corps d'étranglement (14, 60) déformable ou déplaçable contre une force de résistance, qui sépare une première chambre d'amortisseur (18a, 52) à volume variable d'une deuxième chambre d'amortisseur (18b, 70), et comprenant un canal d'étranglement (30, 72) existant entre la première chambre d'amortisseur (18a, 52) et la deuxième chambre d'amortisseur (18b, 70), qui créée une liaison de moyen de pression entre les deux chambres d'amortisseur (18a et 18b),
**caractérisé en ce que**
des moyens (34, 34', 74) sont prévus, qui, pendant la position de base du corps d'étranglement (14, 60), dans laquelle la première chambre d'amortisseur (18a) présente son volume minimal et la deuxième chambre d'amortisseur (18b) présente son volume maximal, interrompent la liaison de moyen de pression entre les chambres d'amortisseur (18a, 18b).

2. Dispositif d'amortissement selon la revendication 1, **caractérisé en ce que** le canal d'étranglement (30, 72) est formé sur le corps d'étranglement (14, 60) et **en ce que** les moyens (34, 74) ferment ce canal d'étranglement (30, 72) pendant que le corps d'étranglement (14, 60) occupe sa position de base.

3. Dispositif d'amortissement selon la revendication 2, **caractérisé en ce que** les moyens (34, 74) ferment une section transversale d'embouchure du canal d'étranglement (30, 72) dans la première chambre d'amortisseur (18a, 52).

4. Dispositif d'amortissement selon l'une quelconque des revendications 1 à 3, **caractérisé en ce que** les moyens (34, 74) comprennent une bague d'étanchéité, qui est agencée dans la première chambre d'amortisseur (18a, 52).

5. Dispositif d'amortissement selon l'une quelconque des revendications 1 à 3, **caractérisé en ce que** les moyens (74) comprennent une cheville, un cône ou une tige, qui sont agencés dans la première chambre d'amortissement (18a, 52).

6. Dispositif d'amortissement selon l'une quelconque des revendications 1 à 5, **caractérisé en ce que** le corps d'étranglement (14, 60) comprend un piston étagé (14) pouvant être actionné contre la force d'un ressort de rappel et étagé au niveau de son diamètre extérieur, qui est reçu en un mouvement de va-et-vient dans une cavité (12), étagée d'une manière correspondante au niveau de son diamètre intérieur, du dispositif d'amortisseur (10, 10').

7. Dispositif d'amortissement selon l'une quelconque des revendications 1 à 5, **caractérisé en ce que** le corps d'étranglement (14, 60) comprend une membrane déformable élastiquement (60), qui repose du côté de la périphérie sur un épaulement (64) du dispositif d'amortissement (42).

8. Dispositif d'amortissement selon l'une quelconque des revendications 1 à 7, **caractérisé en ce que** la première chambre d'amortisseur (18a, 52) peut être raccordée à un côté de pression d'un générateur de pression (22) et **en ce que** la deuxième chambre d'amortisseur (18b, 70) peut être raccordée à un frein de roue (26, 56) et à un cylindre de freinage principal (24) de l'unité de freinage de véhicule.
